# EUROPÄISCHE PATENTSCHRIFT

(11) **EP 0 707 880 B1**
(45) Veröffentlichungstag und Bekanntmachung des Hinweises auf die Patenterteilung: **22.09.1999**
(21) Anmeldenummer: 95113587.0
(22) Anmeldetag: 30.08.1995
(51) Int. Cl.: B01D 53/14, C10K 1/08

(54) **Verfahren zum Reinigen eines Gases mit einer Waschflüssigkeit**
Process for cleaning a gas with a washing liquid
Procédé de purification d'un gaz avec un liquide de lavage

(30) Priorität: 21.10.1994 DE 4437628
(43) Veröffentlichungstag der Anmeldung: 24.04.1996
(73) Patentinhaber: Metallgesellschaft Aktiengesellschaft, 60325 Frankfurt am Main (DE)
(72) Erfinder: Grünewald, Gerhard, D-55122 Mainz (DE); Kriebel, Manfred, Dr., D-63263 Neu-Isenburg (DE); Zwiefelhofer, Uwe, D-61476 Kronberg (DE)

(56) Entgegenhaltungen:
- EP-A- 0 131 920
- EP-A- 0 267 819
- DE-A- 3 314 381
- GB-A- 851 899
- US-A- 3 824 766
- PATENT ABSTRACTS OF JAPAN vol. 11 no. 371 (C-462) ,3.Dezember 1987 & JP-A-62 143808 (NIPPON STEEL CORP.) 27.Juni 1987,
- PATENT ABSTRACTS OF JAPAN vol. 12 no. 159 (C-495) ,14.Mai 1988 & JP-A-62 273290 (MITSUBISHI HEAVY IND. LTD.) 27.November 1987,

## Beschreibung

Die Erfindung betrifft ein Verfahren zum Entschwefeln eines Rohgases, das aus der Vergasung von Schweröl stammt und zunächst gekühlt wird, bevor es in mindestens einer Waschkolonne im direkten Kontakt mit einer physikalisch wirkenden Waschflüssigkeit entschwefelt wird, wobei man der Waschkolonne eine aus der Regenerierung kommende, gekühlte Waschflüssigkeit zuführt und aus der Waschkolonne ein entschwefeltes Reingas mit einem Druck im Bereich von 1 bis 12 MPa (20 bis 120 bar) abzieht, das Reingas in einer Entspannungsturbine Arbeit leistend entspannt und dabei die Temperatur des Reingases am Austritt aus der Turbine gegenüber der Temperatur am Turbineneinlaß um 20 bis 80°C absenkt.

Ein solches Verfahren ist aus US-A-3 824 766 bekannt. Das Rohgas wird hierbei durch indirekten Wärmeaustausch mit aus der Waschkolonne kommendem Reingas gekühlt, bevor das Reingas in die Entspannungsturbine eintritt. Nach der Turbine wird das Reingas in direkten Kontakt mit Waschflüssigkeit gebracht, die dann der Waschkolonne aufgegeben wird. In DE-A-33 14 381 wird beschrieben, Rauchgas bei einem Druck von 150 bis 300 kPa (1,5 bis 3 bar) mit Dimethylformamid zu waschen, das gewaschene Gas zu entspannen und die Waschlösung durch einen indirekten Wärmeaustauscher zu leiten, der von der Waschflüssigkeit durchflossen wird, bevor diese in die Waschzone eintritt.

Der Erfindung liegt die Aufgabe zugrunde, einen wirtschaftlichen Weg für die erforderliche Kühlung zu finden. Erfindungsgemäß geschieht dies dadurch, daß man das aus der Turbine abgezogene Reingas durch einen ersten indirekten Wärmeaustauscher und anschließend durch einen zweiten indirekten Warmeaustauscher leitet und dabei im ersten Wärmeaustauscher die der Waschkolonne zuzuführende Waschflüssigkeit und im zweiten Wärmeaustauscher das der Waschkolonne zuzuführende Rohgas kühlt.

Das erfindungsgemäße Verfahren eignet sich für die Entschwefelung des Rohgases mit physikalischen Waschflüssigkeiten, z. B. Methanol, N-Methylpyrrolidon (NMP) oder Dimethylether von Polyethylenglycol (DMPEG).

Das aus der Waschkolonne abgezogene Reingas weist vor der Arbeit leistenden Entspannung zumeist einen Druck im Bereich von 3 bis 10 MPa (30 bis 100 bar) auf, und die Waschflüssigkeit wird nach dem indirekten Warmeaustausch mit dem Reingas mit einer Temperatur im Bereich von +30°C bis -70°C in die Waschkolonne geleitet.

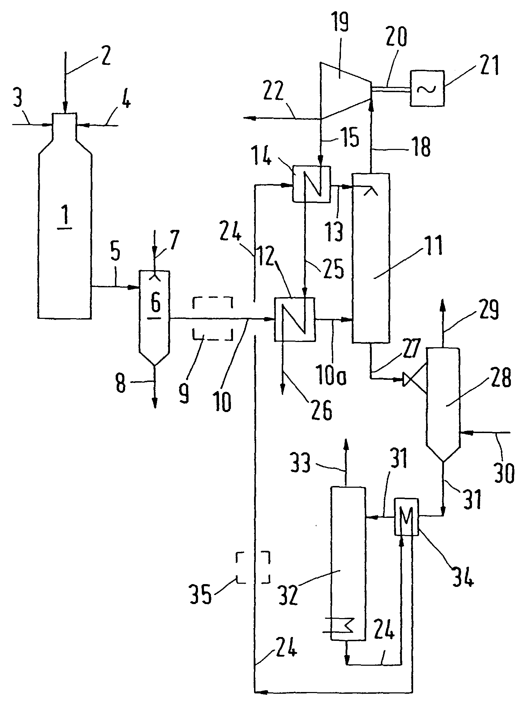

Ausgestaltungsmöglichkeiten des Verfahrens werden mit Hilfe der Zeichnung erläutert, sie zeigt in schematischer Darstellung ein Fließschema der Gasreinigung.

Beim Verfahren der Zeichnung wird ein Rohgas entschwefelt, das aus der Vergasung von Schweröl stammt. Dem leeren Vergasungsreaktor (1) wird durch die Leitung (2) Schweröl, durch die Leitung (3) O₂-reiches Gas und durch die Leitung (4) Wasserdampf zugeführt. Das entstehende Gas, das noch Rußpartikel enthält, wird durch die Leitung (5) einem Waschkühler (6) aufgegeben, wo es mit Wasser aus der Leitung (7) besprüht wird. Rußhaltiges Wasser zieht man in der Leitung (8) ab. Das grob gereinigte Gas wird durch die Leitungen (10) und (10a) in eine Entschwefelungskolonne (11) geführt. Zuvor wird das Gas im indirekten Wärmeaustauscher (12) gekühlt, wobei stromaufwärts eine weitere Kühlung (9) erfolgt sein kann, falls dies erforderlich ist. Die Temperatur des Gases in der Leitung (10a) liegt üblicherweise unterhalb von +40°C.

Der Druck in der Entschwefelungskolonne liegt im Bereich von 2 bis 12 MPa (20 bis 120 bar) und zumeist im Bereich von 3 bis 10 MPa (30 bis 100 bar). Der Kolonne (11) gibt man durch die Leitung (13) eine Waschflüssigkeit auf, welche Schwefelverbindungen, insbesondere H₂S, physikalisch zu absorbieren in der Lage ist. Solche Waschflüssigkeiten sind z. B. Methanol oder NMP. Bevor die Waschflüssigkeit in die Kolonne (11) geleitet wird, kühlt man sie durch indirekten Wärmeaustausch im Kühler (14) mit kaltem Reingas aus der Leitung (15) auf eine Temperatur im Bereich von +20°C bis -70°C. Die Temperatur, mit welcher die Waschflüssigkeit in die Kolonne (11) eintritt, hängt vor allem auch von der Art der Waschflüssigkeit ab, wobei z. B. bei Methanol eine niedrigere Temperatur als bei NMP gewählt wird.

Aus der Entschwefelungskolonne (11) zieht man in der Leitung (18) entschwefeltes Reingas ab, welches einen Druck von 2 bis 12 MPa (20 bis 120 bar) und vorzugsweise mindestens 3 MPa (30 bar) aufweist. Das Reingas wird in der Turbine (19) Arbeit leistend entspannt, wobei die Turbine über die Welle (20) einen Strom erzeugenden Generator (21) antreibt. Während der Entspannung in der Turbine (19) wird das Reingas abgekühlt, wobei sich auch Kondensat bilden kann, welches man in der Leitung (22) abzieht. Dieses Kondensat enthält Waschflüssigkeit, welche wiedergewonnen werden kann.

Das in der Turbine (19) entspannte Reingas, welches in der Leitung (15) abstömt, weist eine um 20 bis 80°C niedrigere Temperatur als das Reingas der Leitung (18) auf. Das so gekühlte Reingas wird im Wärmeaustauscher (14) zum indirekten Kühlen der Waschflüssigkeit verwendet, die in der Leitung (24) herangeführt wird. Falls nötig, wird das Reingas der Leitung (15) noch durch einen Kondensatabscheider geführt, der in der Zeichnung nicht dargestellt ist.

Das gekühlte Reingas der Leitung (15) gibt zunächst einen Teil seiner Kälte im Wärmeaustauscher (14) an die Waschflüssigkeit ab und strömt dann durch die Leitung (25) zum Wärmeaustauscher (12), wo es der Kühlung des Gases der Leitung (10) dient. Das angewärmte Reingas wird in der Leitung (26) abgezogen und kann nun z. B. als Brenngas in einer Gasturbine oder in anderer Weise verwendet werden.

Die beladene Waschflüssigkeit verläßt die Entschwefelungskolonne (11) in der Leitung (27) und wird zum Regenerieren zunächst in einen Entspannungsbehälter (28) geleitet, aus dem man durch die Leitung (29) ein Entspannungsgas abzieht. Zum Unterstützen der Regeneration der Waschflüssigkeit kann man dem Entspannungsbehälter (28) durch die Leitung (30) noch Strippgas (z. B. Stickstoff) zuführen. Teilregenerierte Waschflüssigkeit verläßt den Behälter (28) in der Leitung (31) und wird nach Erwärmen im indirekten Wärmeaustauscher (34) einer Heißregenerierung (32) aufgegeben.

Das hierbei freigesetzte, H₂S-haltige Regenerations-Abgas kann in der Leitung (33) z. B. einer Claus-Anlage zugeführt werden.

Relativ heiße regenierte Waschflüssigkeit zieht man aus der Heißregenerierung (32) in der Leitung (24) ab und führt sie zum Kühlen zunächst durch den Wärmeaustauscher (14), bevor man sie in der Enschwefelungskolonne (11) wiederverwendet. Falls erforderlich, kann dazwischen eine weitere Kühlung (35) vorgesehen werden. Eine solche weitere Kühlung kann gegebenenfalls auch in der Leitung (13) vorgesehen werden.

## Patentansprüche

1. Verfahren zum Entschwefeln eines Rohgases (5), das aus der Vergasung (1) von Schweröl stammt und zunächst gekühlt (6) wird, bevor es in mindestens einer Waschkolonne (11) im direkten Kontakt mit einer physikalisch wirkenden Waschflüssigkeit (13) entschwefelt wird, wobei man der Waschkolonne (11) eine aus einer Regenerierung (32) kommende, gekühlte Waschflüssigkeit (13) zuführt und aus der Waschkolonne (11) ein entschwefeltes Reingas (18) mit einem Druck im Bereich von 2 bis 12 MPa (20 bis 120 bar) abzieht, das Reingas (18) in einer Entspannungsturbine (19) Arbeit leistend entspannt und dabei die Temperatur des Reingases am Austritt aus der Turbine (19) gegenüber der Temperatur am Turbineneinlaß um 20 bis 80°C absenkt, dadurch gekennzeichnet, daß man das aus der Turbine (19) abgezogene Reingas (15) durch einen ersten indirekten Wärmeaustauscher (14) und anschließend durch einen zweiten indirekten Wärmeaustauscher (12) leitet und dabei im ersten Wärmeaustauscher (14) die der Waschkolonne (11) zuzuführende Waschflüssigkeit (24) und im zweiten Wärmeaustauscher (12) das der Waschkolonne (11) zuzuführende Rohgas (10) kühlt.

## Claims

1. A process for the desulphurisation of a crude gas (5) which originates from the gasification (1) of heavy oil and is first cooled (6) before being desulphurised in direct contact with a physically-acting washing liquid (13) in at least one scrubbing column (11), wherein a cooled scrubbing liquid (13) coming from a regeneration stage (32) is supplied to the scrubbing column (11) and a desulphurised pure gas (18) is withdrawn from the scrubbing column (11) at a pressure in the range from 2 to 12 MPa (20 to 120 bar), the pure gas (18) is expanded with performance of work in an expansion turbine (19) and in so doing the temperature of the pure gas at the exit from the turbine (19) is lowered by 20 to 80°C compared with the temperature at the turbine inlet, characterised in that the pure gas (15) withdrawn from the turbine (19) is passed through a first indirect heat exchanger (14) and then through a second indirect heat exchanger (12) and in so doing the scrubbing liquid (24) to be supplied to the scrubbing column (11) is cooled in the first heat exchanger (14) and the crude gas (10) to be supplied to the scrubbing column (11) is cooled in the second heat exchanger (12).

## Revendications

1. Procédé pour désulfurer un gaz brut (5), qui provient de la gazéification (1) de l'huile lourde, et qui est d'abord refroidi (6) avant d'être désulfuré dans au moins une colonne de lavage (11) par contact direct avec un liquide de lavage (13) à effet physique, un liquide de lavage (13), refroidi et provenant d'une unité de régénération (32), étant envoyé à la colonne de lavage (11), un gaz épuré désulfuré (18) étant soutiré de la colonne de lavage (11) sous une pression comprise entre 2 et 12 MPa (entre 20 et 120 bar), le gaz épuré (18) étant détendu, avec fourniture de travail, dans une turbine de détente (19), la température du gaz épuré à la sortie de la turbine (19) étant de 20 à 80°C plus basse que la température à l'entrée de la turbine, caractérisé en ce qu'on envoie le gaz épuré (15) soutiré de la turbine (19) dans un premier échangeur de chaleur indirect (14), puis dans un deuxième échangeur de chaleur indirect (12), en refroidissant à cette occasion dans le premier échangeur de chaleur (14) le liquide de lavage (24) qui doit être envoyé à la colonne de lavage (11), et dans le deuxième échangeur de chaleur (12) le gaz brut (10) qui doit être envoyé à la colonne de lavage (11).
